# EUROPEAN PATENT APPLICATION

(11) **EP 2 025 985 A2**
(43) Date of publication of application: **18.02.2009**
(21) Application number: 08386014.8
(22) Date of filing: 08.07.2008
(51) Int. Cl.: F16L 1/028

(54) **Automatic pipe extractor**

(30) Priority: 18.07.2007 GR 20070100459
(71) Applicant: Zacharopoulos, Aristeidis, Lamia (GR)
(72) Inventor: The designation of the inventor has not yet been filed

(57) **Abstract**

The invention refers to a heating and water pipes extractor, composed of a base (1), a motor (2), a tool (10) and an axle (3) equipped with two plastic coated metal wires.

So far the pipes extraction was done by manually pulling the pipes.

With the use of the manual extraction technique, the technician has to deal with great resistances due to the inflexibility built on the pipe by time of use and temperature changes, making it really difficult to even change the pipe.

According to the extractor's characteristics, the pipe is pulled by one side with the metallic wire (8) that is located on the axle (9) and by using the control buttons the replacement procedure is initiated.

In the case that the pipe is broken, there is a second metallic wire (7) that is located in the empty spiral all the way to the other side catches the broken pipe and initiates the extractor procedure again.

This type of extractor is one of a kind and enable the pipe extraction in a really short time without the technician exercising muscular strength. It is also the solution to the problem of extracting bad quality broken pipes under the floor, which was very difficult in the past.

## Description

The invention refers to a heating and water pipes extractor, composed of a base, a motor, a tool and an axle equipped with two plastic coated metal wires.

So far the pipes extraction was done by manually pulling the pipes.
with the use of the manual extraction technique, the technician has to deal with great resistance due to the inflexibility built on the pipe by time of use and temperature changes, making it really difficult to even change the pipe.

According to the extractor's characteristics, the pipe is pulled by one side with the metallic wire (8) that is located on the axle (9) and by using the control buttons the replacement procedure is initiated.

In the case that the pipe is broken, there is a second metallic wire (7) that is located in the empty spiral all the way to the other side catches the broken pipe and initiates the extractor procedure again.

This type of extractor is one of a kind and enable the pipe extraction in a really short time without the technician exercising muscular strength. It is also the solution to the problem of extracting bad quality broken pipes under the floor, which was very difficult in the past.

The use of the extractor is really simple and is as follows:
The extractor is placed on the floor above the pipe to be extracted. The spacers are adapted (13) as to stabilise the extractor to avoid scratching the wall. We use the appropriate metallic wire (8) and use an appropriate joint according to the size of the pipe to be extracted. Then on the other side of the old pipe, we attach the new pipe. Finally by using the controls of the extractor the procedure is initiated.

In the case that the pipe is broken or breaks during the extraction, there is a second metallic wire (7) that is located in the empty spiral all the way to the other side catches the broken pipe and initiates the extractor procedure again.

We extract until the broken part is totally out of the spiral way and reset the extractor to the initial place and start to insert the metallic wire in the spiral until it comes out on the other side. When it comes out the we can adjust the new pipe on the wire with a joint and continue the insertion procedure.

### PARTS OF THE EXTRACTOR

the extractor is compose of a base (1), on which a motor is fitted (2) giving movement to an axle (3) through a chain (4) placed on the side of the machine and protected with a cover (5).

On the axle there are two parts (6) and (7).

On (6) we collect the pipe by grabbing it with a metallic wire (8) supported on place (6) and a runway (9).

On place (7) there is a metallic wire of great length with which we can extract the broken pipes. Also on place (3) we have placed a tool (10) that can turn the extractor manual from electrical with the pull of a single pin (4).

Finally, on the base of the unit (1) a carrying belt is applied (12) and two spacers (13).

The difference between plan A and plan B is that in plan B we have removed the metallic wire (7) for a greater pipe collection space.

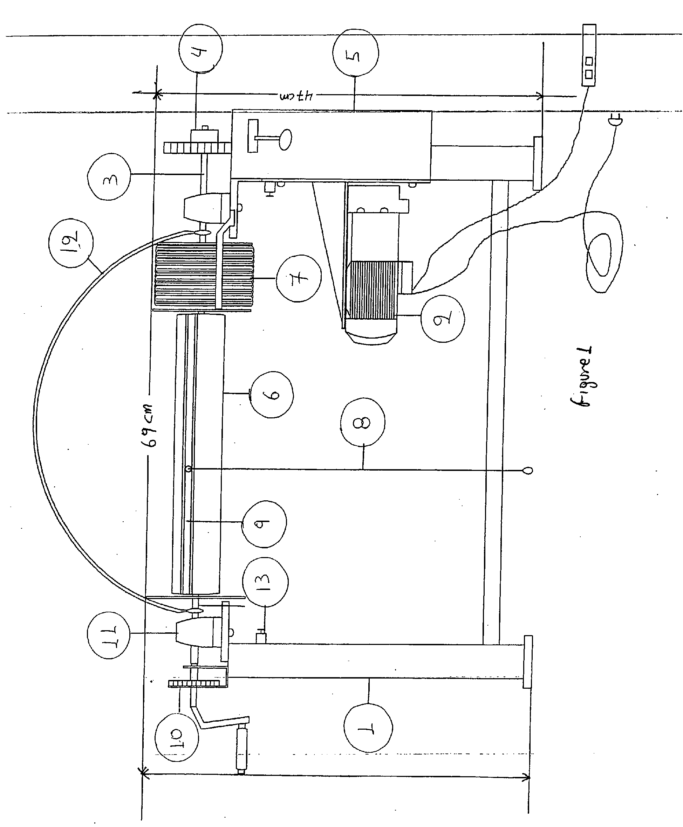

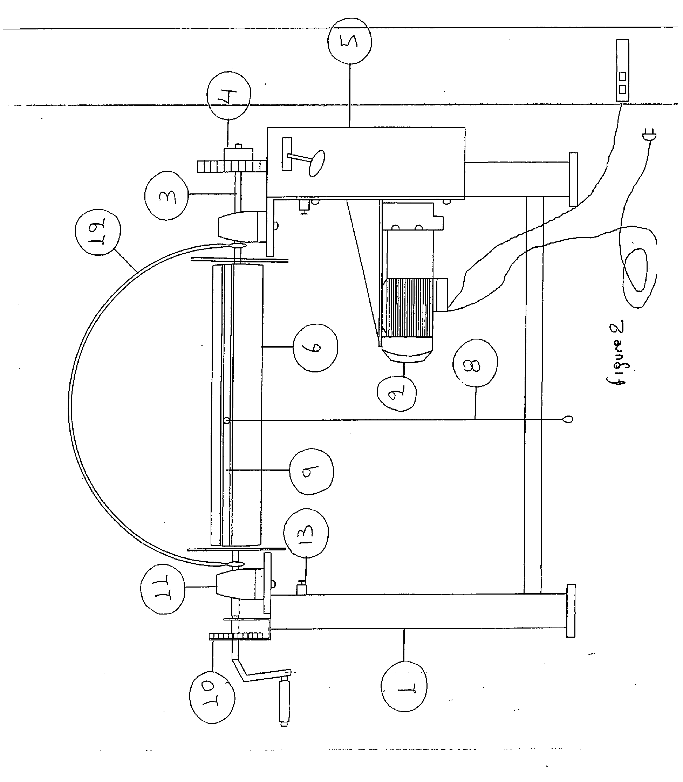

## Claims

1. the extractor is compose of a base (1), on which a motor is fitted (2) giving movement to an axle (3) through a chain (4) placed on the side of the machine and protected with a cover (5).
On the axle there are two parts (6) and (7).
On (6) we collect the pipe by grabbing it with a metallic wire (8) supported on place (6) and a runway (9).
On place (7) there is a metallic wire of great length with which we can extract the broken pipes. Also on place (3) we have placed a tool (10) that can turn the extractor manual from electrical with the pull of a single pin (4).
Finally, on the base of the unit (1) a carrying belt is applied (12) and two spacers (13).
